# EUROPÄISCHE PATENTSCHRIFT

(11) **EP 0 385 432 B1**
(45) Veröffentlichungstag und Bekanntmachung des Hinweises auf die Patenterteilung: **13.07.1994**
(21) Anmeldenummer: 90103889.3
(22) Anmeldetag: 28.02.1990
(51) Int. Cl.: B29C 51/12

(54) **Verfahren zur Herstellung eines dreidimensional verformten, beharzten Textilmaterials und seine Verwendung**
Method for producing a three-dimensionally shaped, resin coated textile material and use of same
Procédé pour fabriquer un matériel textile résiné, prémoulé à trois dimensions et son utilisation

(30) Priorität: 03.03.1989 DE 3906877
(43) Veröffentlichungstag der Anmeldung: 05.09.1990
(73) Patentinhaber: HOECHST AKTIENGESELLSCHAFT, 65926 Frankfurt am Main (DE)
(72) Erfinder: Weber, Peter, D-6230 Frankfurt am Main 80 (DE); Stallmann, Klaus, Dr., D-6100 Darmstadt (DE)

(56) Entgegenhaltungen:
- EP-A- 0 185 960
- EP-A- 0 345 463
- DE-A- 3 325 327
- DE-A- 3 812 323
- US-A- 4 230 764

## Beschreibung

Die vorliegende Erfindung betrifft ein Verfahren zur Herstellung eines formstabilen, dreidimensional verformten, beharzten, flächenförmigen Textilmaterials mit filigranartiger Netzstruktur, die nach diesem Verfahren erhaltenen verformten Gebilde sowie deren Verwendung als Kernmaterial bei der Herstellung von flächenförmigen Sandwichkörpern.

Flächenförmige Sandwichkörper aus einem Kern und zwei Deckschichten, deren Kern formstabile, dreidimensional verformte Textilmaterialien aufweist, sind bereits z.B. aus der FR-A-23 25 503 und der EP-A-158 234, von welcher der Oberbegriff des Anspruchs 1 ausgeht, bekannt. Das in diesen Druckschriften beschriebene Sandwichmaterial hat einen Kern aus einem dreidimensional verformten, flächenförmigen Textilmaterial, welches auf einer Basisfläche in regelmäßiger Anordnung eine Vielzahl von Erhebungen mit gleicher Höhe und flachem Plateau aufweist. Erhebliche Unterschiede zwischen den aus der FR-A-23 25 503 und der EP-A-158 234 bekannten Kernmaterialien bestehen bezüglich ihrer Struktur. Während die aus FR-A-23 25 503 bekannten Materialien eine im wesentlichen vollständig geschlossene Struktur zeigen, bei der sowohl die textilen Grundflächen als auch die Wandungen der auf der Grundfläche verteilten Erhebungen, eine massive, porenfreie, faserdurchzogene Harzmasse bilden, stellen die aus der EP-A 158 234 bekannten Kernmaterialien eine Netzwerkstruktur aus harzimprägnierten Fäden mit offenen Maschen dar.

Die Herstellung des aus der FR-A-2 325 503 bekannten Kernmaterials mit geschlossener Struktur erfolgt durch Pressen eines harzgetränkten Stapelfasergeleges in eine Preßform der gewünschten geometrischen Gestalt. Dabei wird, bezogen auf das Fasergewicht, eine relativ hohe Harzmenge eingesetzt, so daß sich nach dem Pressen ein im wesentlichen faserverstärkter Harzformkörper ergibt.

Das so erhaltene Kernmaterial hat ein relativ hohes Gewicht. Es gestattet keinen Gasaustausch und es zeigt eine geringe Flexibilität.

Das aus der EP-A-158 234 bekannte netzstrukturierte (im folgenden auch filigranstrukturierte genannt) Kernmaterial wird hergestellt durch Tiefziehen eines mit relativ wenig Harz imprägnierten, tiefziehfähigen Textilmaterials wie z.B. einer harzimprägnierten Maschenware (Gewirke, Gestrick). Dieses aus der EP-A-158 234 bekannte Kernmaterial hat bei guter mechanischer Stabilität ein niedriges Raumgewicht. Es gestattet einen freien Gasaustausch zwischen den Seiten der Fläche und es weist eine hohe Flexibilität auf.

Wie oben bereits ausgeführt, erfolgt die Herstellung der aus der EP-A-158 234 bekannten Kernmaterials durch Imprägnieren eines flächenförmigen Textilmaterials mit einem thermoplastischen oder duroplastischen Harz, Trocknen des imprägnierten Materials zu einem sogenannten Prepreg und anschließende Verformung des Prepregs zur gewünschten Form des Kernmaterials durch einen Tiefziehprozeß.

Ein gravierender Nachteil dieses Herstellungsverfahrens besteht darin, daß es sehr schwierig ist, ein tiefziehfähiges flächenförmiges Textilmaterial gleichmäßig mit einem Harz zu imprägnieren, ohne daß es dabei zu einer ganzen oder partiellen Vordehnung des Materials kommt. Ein derartiger, gegebenenfalls ungleichmäßiger, Verzug der textilen Fläche hat eine mangelnde Tiefziehfähigkeit und im Fertigprodukt eine, gegebenenfalls partielle, Reduktion der Faserfestigkeit zur Folge. Auch die Handhabung des noch nicht vorkondensierten, mit Harz imprägnierten, tiefziehfähigen Textilmaterials kann leicht zu einer partiellen Vordehnung dieses Materials führen, mit den oben erwähnten Nachteilen für die Gleichmäßigkeit der Qualität des Endproduktes, wenn nicht besondere Vorsichtsmaßnahmen getroffen werden. Diese Herstellungsprobleme stehen bis zu einem gewissen Grad der weiten Verbreitung dieser an sich überaus günstigen Kernmaterialien im Wege. Die vorliegende Erfindung überwindet den Nachteil dieses bekannten Herstellungsverfahrens.

Die vorliegende Erfindung betrifft somit ein Verfahren zur Herstellung eines formstabilen, dreidimensional verformten, beharzten, flächenförmigen Textilmaterials, das dadurch gekennzeichnet ist, daß eine oder mehrere Schichten eines tiefziehfähigen Textilmaterials und eine oder mehrere Harzfolien übereinandergestapelt werden, der Stapel bei einer Temperatur, bei der das Harz fließfähig wird durch einen Formprozeß in die gewünschte Form gebracht wird, und daß man danach die Temperatur so einstellt, daß das Harz erhärten kann, und den geformten Stapel so lange in der gewünschten Form hält, bis das Harz vollständig oder hinreichend erhärtet ist, wobei der Begriff "hinreichend erhärtet" so zu verstehen ist, daß das Harz in diesem Zustand in der Lage ist, das verformte Flächengebilde nach dem öffnen des Tiefziehwerkzeuges in der gewünschten Form zu stabilisieren.

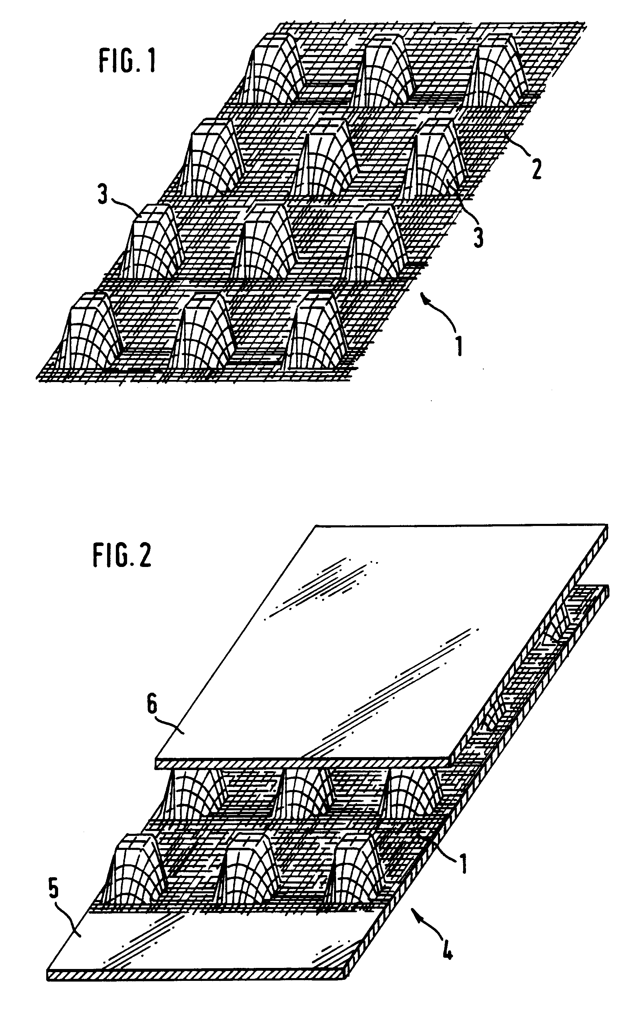

Die Figur 1 veranschaulicht schematisch ein erfindungsgemäß hergestelltes formstabiles, dreidimensional verformtes, beharztes flächenförmiges Textilmaterial (1), das auf einer Grundfläche (2) eine Vielzahl von Erhebungen (3) aufweist. Insbesondere in den Erhebungen zeigt die Figur eine durch die Dehnung des Grundmaterials erhaltene netzartige Filigranstruktur.

Als tiefziehfähiges Textilmaterial kommt im Prinzip jedes flächenförmige Textilmaterial in Betracht, dessen Dehnbarkeit die beim Tiefziehen auftretende partielle Flächenvergrößerung ohne Reißen des Textilmaterials ermöglicht. Wie bereits in der EP-A-158 234 angegeben, eignen sich als tiefziehfähige Textilmaterialien insbesondere Maschenwaren wie z.B. Gewirke oder Gestricke, bei denen die Dehnbarkeit aus der Verformbarkeit der Maschenstruktur resultiert. Es ist auch bereits vorgeschlagen worden, tiefziehfähige textile Flächengebilde aus Umwindegarnen herzustellen, die aus einem fadenförmigen Kernmaterial bestehen, welches von einem Hüllfaden umwunden wird, der 1,5- bis 3-mal, vorzugsweise 1,8- bis 2,2-mal länger ist als das Kernmaterial. Ein flächenförmiges Textilmaterial aus einem derartigen Umwindegarn kann in Form eines Gewebes, eines Gewirkes, einer Raschelware, eines Geleges oder eines durch Umwindefäden verstärkten Vlieses vorliegen. Beim Tiefziehen eines solchen Materials werden die Kernfäden in den zu verformenden Bereichen statistisch verteilt zerrissen und geben dabei eine entsprechende Länge des Hüllfadens frei. Dieser Mechanismus ermöglicht im Verlauf des Tiefziehvorganges eine erhebliche Flächenvergrößerung ohne Zerstörung des gesamten Flächenzusammenhalts. Besonders bevorzugt dabei ist die Verwendung eines Umwindegarns, dessen Kernfäden eine niedrigere Stabilität haben als die Hüllfilamente, d.h. daß der Kernfaden bei der beim Tiefziehen auftretenden mechanischen und gegebenenfalls auch thermischen Belastung und/oder durch den Einfluß von Chemikalien zerstört wird, während der Hüllfaden gestreckt wird und die tragende Funktion im Flächengebilde übernimmt.

Als tiefziehfähige Textilmaterialien kommen weiterhin solche in Betracht, die eine hohe, nicht-elastische Verformbarkeit aufweisen, wie sie z.B. aus der GB-A-2 176 511 sowie den Derwent Referaten 87-025859/04 und 87-040235/06 der Japanischen Patentpublikationen 61-282452 und 61-296152 bekannt sind. Diese bekannten dreidimensional verformbaren Textilmaterialien werden hergestellt, indem man entsprechende flächenförmige Textilmaterialien aus Synthesefasern einer Wärmeschrumpfbehandlung unterwirft und ihnen dadurch eine nicht-elastische Dehnbarkeit vermittelt, oder indem man diese Textilmaterialien von vornherein aus Garnen erzeugt, die bereits eine nicht-elastische Dehnbarkeit mitbringen. Nicht-elastisch dehnbare Garne sind beispielsweise beschrieben in der DE-A-28 21 243 und der DE-C-35 21 469.

Das Fadenmaterial, aus dem das tiefziehfähige textile Flächengebilde hergestellt wird, ist keiner Beschränkung unterworfen; sowohl Gestricke als auch die aus Umwindegarnen hergestellten tiefziehfähigen Textilmaterialien können aus Endlosfilamentgarnen als auch aus Spinnfasergarnen bestehen. Es können aber auch beispielsweise Bändchenfäden oder Spleißbändchenfäden eingesetzt werden. Dasselbe gilt auch für die chemische Natur des Fadenmaterials. So ist es im Prinzip möglich, daß das tiefziehfähige Textilmaterial aus einem Umwindegarn oder aus einem Gestrick aus Naturfasern, Synthesefasern oder anorganischen Fasern oder Endlosfilamenten, wie z.B. Glasfasern besteht. Im Hinblick auf die bessere Variabilität der Festigkeitseigenschaften des Materials inbesondere im endgültig verfomten Zustand ist es Jedoch vorteilhaft, daß das Textilmaterial aus Synthesefasern aufgebaut ist. Steht dagegen die Schwerentflammbarkeit oder Schwerbrennbarkeit des Materials im Vordergrund so ist es bevorzugt, Maschenware aus anorganischen Fasern einzusetzen. Synthetische Materialien, die in Betracht kommen sind beispielsweise Polyalkylene, Polyamide, Polyester oder Polyacrylnitril. Besonders bevorzugt sind für Gestricke Polyestermaterialien, insbesondere hochfeste Typen, tiefziehfähige Textilmaterialien aus Umwindegarn enthalten vorzugsweise Umwindefäden, deren Kernfäden mit niedrigerer Stabilität aus Polyalkylen oder aliphatischen Polyamiden bestehen und deren Hüllfäden, die die Endfestigkeit und Stabilität des durch Tiefziehen verformten, dreidimensionalen Elementes bestimmen, aus aromatischen Polyestern, aromatischen Polyamiden oder Polyacrylnitril, insbesondere aus den hochfesten Typen bestehen.

Die beim erfindungsgemäßen Verfahren einzusetzenden Harzfolien können aus thermoplastischen oder duroplastischen Harzen (im folgenden auch mit Matrixmaterial bezeichnet) bestehen. Als thermoplastisches oder hitzehärtendes Harz wird ein solches verwendet, welches das flächenförmige Textilmaterial so versteifen kann, daß es selbsttragend wird. Bevorzugt sind daher insbesondere Duroplaste, d.h. solche Harze, die bei erhöhter Temperatur unter Vernetzung zu einem unschmelzbaren Material hoher Steifigkeit aushärten. Bekannte derartige Harze sind z.B. ungesättigte Polyesterharze (Alkydharze), Mischungen aus ungesättigten Polyestern mit ungesättigten monomeren Verbindungen wie z.B. Styrol, Epoxidharze, Phenolharze oder Melaminharze. Diese Harze werden im unvernetzten Zustand in welchem sie bei erhöhter Temperatur noch schmelzbar und fließfähig sind, in den Handel gebracht und appliziert. Die erfindungsgemäß einzusetzenden Folien aus diesen, noch unvernetzten Harzen, haben eine Stärke von etwa 50 bis 500 »m, vorzugsweise von 100 bis 500 »m und ein Flächengewicht von etwa 50 bis 500 g/m², vorzugsweise 100 bis 500 g/m²
Selbstverständlich ist es auch möglich, für spezielle Zwecke z.B. für die Verarbeitung sehr feiner oder besonders dicker Textilmaterialien, dünnere oder dickere Harzfolien mit entsprechend niedrigerem oder höherem Flächengewicht einzusetzen. In der Regel enthalten diese Harzfolien bereits den zur Vernetzung des Harzes erforderlichen Vernetzer und den erforderlichen Polymerisationskatalysator und die zweckmäßigen Beschleunigersubstanzen.

Handelsübliche Harzfolien sind häufig zur Verbesserung ihrer mechanischen Stabilität mit einem Träger versehen. Auch solche Harzfolien sind für die Durchführung des erfindungsgemäßen Verfahrens gut geeignet. Als Beispiel für handelsübliche Harzfolien auf Basis von Epoxid-Harz, die mit oder ohne Träger erhältlich und erfindungsgemäß einsetzbar sind, sei die von Hexcel S.A. in den Handel gebrachte Harzfolie ^{(R)}Structufilm R 382 genannt.

Zur Herstellung des dreidimensional verformten Textilmaterials wird eine oder mehrere Schichten des tiefziehfähigen Textilmaterials und eine oder mehrere Harzfolien in geeigneter Abfolge zu einem "Stapel" übereinander gelegt. Ein solcher "Stapel" kann dementsprechend auch aus einer Textilbahn und einer Harzfolie bestehen. Die Anzahl der Textilbahnen richtet sich nach den Anforderungen, die an die Festigkeit des herzustellenden Kernmaterials gestellt werden. In der Regel werden nicht mehr als 4, vorzugsweise 1 oder 2 Textilbahnen, insbesondere eine Textilbahn, in einem Stapel verwendet. Die Anzahl der Harzfolien im Stapel richtet sich nach dem gewünschten Grad der Harzimprägnierung des Textilmaterials. geeignete Auflagenmengen des Harzes liegen im Bereich von 50 bis 500, vorzugsweise von 100 bis 300 g Harz/m² des Textilmaterials. Innerhalb der angegebenen Bereiche kann die Harzmenge noch zweckmäßig an das Quadratmetergewicht des tiefziehfähigen Textilmaterials angepaßt werden. So wird man bei Einsatz eines schweren Textilmaterials innerhalb der oberen Hälfte der angegebenen Bereiche arbeiten, bei leichten Textilmaterialien in der unteren Hälfte. Die Harzmenge wird so bemessen, daß das Textilmaterial im gedehnten Zustand ein filigranartiges Netzwerk bildet. Soll ein Textilmaterial beispielsweise mit einer Harzauflage von 200 g Harz/m² imprägniert werden, so wird in den zu verformenden Stapel, eine Folie von z.B. 0,2 mm Stärke mit einem Flächengewicht von 200 g/m² eingelegt.

Werden in einem zu verformenden Stapel mehrere Textilbahnen vorgesehen, so ist die Abfolge von Textilbahnen und Harzfolien zweckmäßigerweise so zu wählen, daß unter Wärmeeinwirkung beim Tiefziehprozeß eine möglichst gleichmäßige Verteilung des Harzes in die textilen Flächen erfolgen kann. Für dickere Stapel wird man daher zweckmäßigerweise Textilbahnen und Harzfolien alternierend einsetzen. Im Hinblick auf die Reinhaltung des Formwerkzeuges kann es auch vorteilhaft sein, den Stapel so aufzubauen, daß die Ober- und Unterfläche des Stapels von Gewebebahnen gebildet wird und die notwendige Harzmenge durch eine entsprechende Anzahl im Inneren des Stapels liegender Harzfolien gewährleistet wird. So kann beispielsweise ein Stapel aus 2 Textilbahnen und 2 Harzfolien in der Abfolge: Textilbahn - 2 Harzfolien (oder eine stärkere Harzfolie) - Textilbahn aufgebaut sein.

Eine weitere Bemessungsvorschrift für den Stapelaufbau ergibt sich aus den Festigkeitsanforderungen an das dreidimensional verformte Textilmaterial. Bei seinem Einsatz als Kernmaterial für Sandwichformteile muß es eine bestimmte Mindestdruckfestigkeit aufweisen. Diese Forderung ist bei Einsatz vernetzender Harze in der Regel dann zu erfüllen, wenn das Verhältnis des Quadratmetergewichtes des Textilmaterials zum Gewicht des pro Quadratmeter eingesetzten Harzes (entsprechend dem Quadratmetergewicht der Harzfolie) im Bereich von 1:0,25 bis 1:4, vorzugsweise 1:0,5 bis 1:2 liegt. Bei Stapeln aus mehreren Lagen Textilmaterial und mehreren Lagen Harzfolien sind hierbei selbstverständlich die Summen der Quadratmetergewichte des Textilmaterials und der Harzfolien in Betracht zu ziehen.

Wie bereits weiter oben erwähnt, kann es bei speziellen Anwendungen auch erwünscht sein, die Harzmenge gegenüber den üblichen Mengen zu erhöhen. Andererseits kann es bei Einsatz spezieller Techniken bei der Herstellung von Sandwichformkörpern auch durchaus ausreichen, weniger Harz bezogen auf das Textilmaterial einzusetzen, so daß die Harzmatrix nicht das gesamte Fasermaterial einschließt, daß aber die Formstabilität des verformten Stapels gewährleistet ist. Derartige, mit geringer Harzauflage hergestellten Formkörper können durch Verkleben mit Deckschichten zu hochfesten Sandwichkörpern verarbeitet werden, wenn die Formkörper mit einem flüssigen oder pastösen Klebstoff verklebt werden und zuvor mit einer Flüssigkeit benetzt werden, die zudem als Lösungsmittel und/oder Benetzungsmittel für den Klebstoff dient. Hierbei ist zu beobachten, daß der Klebstoff in dem Gitterwerk der netzstrukturierten Formkörper aufsteigt und diese nach dem Aushärten zusätzlich verstärkt. Ohne die Benetzung steigt der Klebstoff nicht an der Wandung empor. Auch durch die Verwendung von hydrophilen Spezialhärtern, die dem Fachmann geläufig sind, läßt sich auf diese Weise eine Steigerung der Druck- und Scherfestigkeit der Sandwichkörper erzielen.

Für spezielle Anwendungen können auch Stapel mit Lagen unterschiedlicher Textilmaterialien eingesetzt werden. So ist es möglich, zwischen mindestens 2 Lagen der oben beschriebenen tiefziehfähigen Textilmaterialien auch z.B. Vliese einzulegen und die Harzfolien zwischen diesen Textilbahnen in der oben beschriebenen Weise zu verteilen. Weiterhin ist es möglich, das Fasermaterial der textilen Flächengebilde zu variieren, beispielsweise können auch Kombinationen von Textilbahnen aus organischen und anorganischen Fasern, wie z.B. Glasfasern, verwendet werden.

Besonders bevorzugte Stapel bestehen aus einer oder zwei Textilbahnen, vorzugsweise Gestricken aus hochfesten Polyesterfasern und einer oder zwei Harzfolien in zweckmäßiger Abfolge.

Der Stapel wird in einer Tiefziehform auf eine solche Temperatur erwärmt, bei der das Harz fließfähig wird, dann in die gewünschte dreidimensionale Form gezogen, und bei einer Temperatur, bei der das Harz aushärten kann, so lange in dieser Form gehalten, bis der Härtungsprozeß des Harzes ganz oder zumindest soweit abgeschlossen ist, daß das tiefgezogene Material formstabil bleibt. Diese Bedingung kann bei Einsatz eines Duroplasten auch bereits bei noch nicht vollständiger Aushärtung gegeben sein. In diesem Fall kann es aus ökonomischen Gründen vorteilhaft sein, die vollständige Aushärtung durch Tempern des Formlings außerhalb des Tiefziehwerkzeugs, z.B. durch eine Wärmebehandlung ca. 10 Minuten bei 160 bis 200°C in einem Trockenofen, auszuführen. In der Fließphase umhüllt das verflüssigte Harz (Matrixwerkstoff) das Fasermaterial des textilen Flächengebildes.

Die Temperatur, bei der das Schmelzen des unvernetzten Harzes erfolgt, liegt in der Regel bei 100 bis 250°C, vorzugsweise bei 140 bis 200°C. Innerhalb dieses Bereiches ist die Temperatur so zu wählen, daß das Fasermaterial gleichmäßig in die Harzmatrix eingeschlossen wird. Die Härtungsdauer vernetzender Harze in diesem Temperaturbereich liegt bei 2 bis 5 Min. Nach Ablauf der Härtungsdauer kann das dreidimensional verformte Textilmaterial dem Formwerkzeug entnommen werden. Wird anstelle eines vernetzenden Harzes, ein Thermoplast eingesetzt, so ist das Tiefziehwerkzeug zunächst auf der Temperatur zu halten, bei der der Thermoplast fließt, um die Einbettung des Fasermaterials in die Polymermatrix zu gewährleisten. Anschließend wird das geschlossene Ziehwerkzeug abgekühlt und so lange in geschlossenem Zustand belassen, bis das Matrixharz wieder vollständig oder zumindest soweit verfestigt ist, daß das tiefgezogene Material formstabil bleibt.

Besonders bevorzugte Ausführungsformen des erfindungsgemäßen Verfahrens sind solche, in denen mehrere der oben genannten bevorzugten Merkmale realisiert werden.

Das erfindungsgemäß hergestellte dreidimensional verformte Textilmaterial kann in an sich bekannter Weise, wie sie z.B. im Europäischen Patent Nr. 158 234 detailliert beschrieben worden ist, zur Herstellung von Sandwichkörpern verwendet werden. Dabei können eine oder mehrere Schichten des dreidimensional verformten Materials als Kern für die Sandwichstruktur eingesetzt werden, wobei die Kernlagen entweder übereinander liegend oder - wie in der genannten Druckschrift beschrieben - ineinandergreifend angeordnet werden können. Zur Herstellung der Sandwichstruktur wird in an sich bekannter Weise das Kernmaterial beidseitig mit relativ dünnen festen Deckschichten versehen. Die Befestigung der Deckschichten am Kernmaterial erfolgt üblicherweise durch geeignete bekannte Kleber, insbesondere durch vernetzende Polymerisatkleber. Die Figur 2 veranschaulicht eine Ausführungsform eines solchen Sandwichkörpers (4). Sie zeigt in schräger Aufsicht ein solches Material mit einer unteren Deckschicht (5), einer teilweise entfernten oberen Deckschicht (6) und dem zwischen den Deckschichten als Kern eingeklebten, erfindungsgemäß hergestellten, formstabilen dreidimensional verformten Textilmaterial (1).

Als Deckschichten für die herstellbaren Sandwichformkörper eignen sich alle auch bisher für Sandwichkonstruktionen verwendeten Außenplatten, wie beispielsweise Aluminium- oder Stahlbleche, insbesondere aber Kunstharzlaminate mit Einlagen, beispielsweise aus Geweben, aus Kohlenstoff- oder Glasfäden. In einfacheren Fällen eignen sich als Deckschichten beispielsweise aber auch Sperrholz oder Hartfaserplatten. Zur Herstellung wird zwischen den beiden, auf den Innenseiten mit dem Klebematerial versehenen Deckschichten das erfindungsgemäß hergestellte Kernmaterial angeordnet, und der so erhaltene Sandwich unter leichtem Druck, gegebenenfalls bei erhöhter Temperatur, verklebt.

Das folgende Ausführungsbeispiel dient zur Veranschaulichung des erfindungsgemäßen Verfahrens.

### Beispiel:

Ein Abschnitt in der Größe von 15 x 30 cm Kantenlänge einer Wirkware mit einem Flächengewicht von 260 g/m² aus hochfestem Polyester-Endlosgarn (^{(R)}Trevira hochfest) wird mit einer handeslüblichen 0,15 mm starken trägerfreien Epoxidharzfolie (^{(R)}Structufilm R 382 der Fa. Hexcel S.A.) Flächengewicht 150 g/m², in der Größe 15 x 30 cm bedeckt und der so erhaltene Stapel in ein auf 200°C vorgewärmtes Tiefziehwerkzeug eingelegt, das mit Patrizen und Matrizen aus Chromnickelstahl ausgerüstet ist. Die Matrize weist ein quadratisches Muster von runden Löchern mit 1,5 cm Durchmesser und einen Mittelpunktsabstand von 2,2 cm und eine Patrize mit einer quadratischen Anordnung von 2 cm hohen runden Stempeln von 1 cm Durchmesser und einem Mittelpunktsabstand von 2,2 cm auf, wobei die Patrizenstempel bezüglich der Matrizenlöcher zentriert sind.

Das Werkzeug wird bei einer Arbeitstemperatur von 200°C geschlossen und 3 Minuten bei dieser Temperatur gehalten.

Anschließend wird das erhaltene dreidimensional verformte Material entnommen.

Das so hergestellte, tiefgezogene Textilmaterial weist auf einer Grundfläche eine regelmäßige Anordnung einer Vielzahl fingerhutähnlicher, ca. 2 cm hoher Erhebungen mit flachem Plateau im Abstand von 2,2 cm auf und zeigt durchgehend eine offene Filigranstruktur. Es ist hervorragend als Kernmaterial zur Herstellung von flächenförmigen Sandwichkörpern geeignet. Eine unter Einsatz dieses verformten Textilmaterials als Kern und zweier 1,5 mm starker Sperrholzplatten als Deckschichten hergestellte Sandwichplatte weist eine Druckfestigkeit von 0,4 N/mm² auf.

## Patentansprüche

1. Verfahren zur Herstellung eines formstabilen, dreidimensional verformten, beharzten, flächenförmigen Textilmaterials mit filigranartiger Netzstruktur, dadurch gekennzeichnet, daß man eine oder mehrere Schichten eines tiefziehfähigen Textilmaterials und eine oder mehrere Harzfolien übereinander stapelt, wobei die Harzmenge so bemessen wird daß das Textilmaterial im gedehnten, tiefgezogenen Zustand ein filigranartiges Netzwerk bildet, und den Stapel bei einer Temperatur, bei der das Harz fließfähig wird, durch Tiefziehen in die gewünschte Form bringt, die Temperatur so einstellt, daß das Harz erhärten kann, und den geformten Stapel so lange in dieser Form hält, bis das Harz vollständig oder hinreichend erhärtet ist.

2. Verfahren gemäß Anspruch 1, dadurch gekennzeichnet, daß das tefziehfähige Textilmaterial eine hohe elastische Dehnbarkeit aufweist.

3. Verfahren gemäß mindestens einem der Ansprüche 1 und 2, dadurch gekennzeichnet, daß das tiefziehfähige Textilmaterial eine Maschenware ist.

4. Verfahren gemäß mindestens einem der Ansprüche 1 bis 3, dadurch gekennzeichnet, daß das tiefziehfähige Textilmaterial aus einem Synthesefaser-Endlos- oder Stapelfasergarn oder aus Glasfilamenten hergestellt ist.

5. Verfahren gemäß mindestens einem der Ansprüche 1 bis 4, dadurch gekennzeichnet, daß das tiefziehfähige Textilmaterial aus einem Polyestergarn hergestellt ist.

6. Verfahren gemäß mindestens einem der Ansprüche 1 bis 5, dadurch gekennzeichnet, daß die Harzfolie aus einem Duroplastharz besteht.

7. Verfahren gemäß mindestens einem der Ansprüche 1 bis 6, dadurch gekennzeichnet, daß die Harzfolie aus einem Epoxidharz, Phenolharz oder Melaminharz besteht.

8. Verfahren gemäß mindestens einem der Ansprüche 1 bis 7, dadurch gekennzeichnet, daß die Anzahl der Textilschichten und Harzfolien im Stapel so bemessen wird, daß das Verhältnis der Summe der Flächengewichte der Textilschichten zur Summe. der Flachengewichte der Harzfolien im Bereich von 1:0,25 bis 1:2 liegt.

9. Verfahren gemäß mindestens einem der Ansprüche 1 bis 8, dadurch gekennzeichnet, daß die Abfolge der Textil- und Harzschichten im Stapel so gestaltet ist, daß das Harz während der Fließperiode das Textilmaterial vollständig durchdringt.

10. Das nach dem Verfahren des Anspruchs 1 hergestellte formstabile dreidimensional verformte, beharzte flächenförmige Textilmaterial.

11. Verwendung des nach dem Verfahren des Anspruchs 1 hergestellten formstabilen, dreidimensional verformten, beharzten, flächenförmigen Textilmaterials zur Herstellung von flächenförmigen Sandwichkörpern.

## Claims

1. A process for producing a form-stable, three-dimensionally deformed, resinated, sheetlike textile material having a filigreelike net structure, which comprises arranging one or more layers of a deep-drawable textile material and one or more resin films on top of one another in a pile, the quantity of resin being chosen so that in the extended, deep-drawn state, the textile material will form a filigreelike network, bringing the pile into the desired form by deep drawing at a temperature at which the resin becomes fluid, adjusting the temperature so that the resin can harden and keeping the formed pile in this form until hardening of the resin is complete or sufficient.

2. The process as claimed in claim 1, wherein the deep-drawable textile material has a high elastic extensibility.

3. The process according to either of claims 1 and 2, wherein the deep-drawable textile material is a knitted fabric.

4. The process as claimed in at least one of claims 1 to 3, wherein the deep-drawable textile material is made of a synthetic fiber continuous filament or spun yarn or of glass filaments.

5. The process as claimed in at least one of claims 1 to 4, wherein the deep-drawable textile material is made of a polyester yarn.

6. The process as claimed in at least one of claims 1 to 5, wherein the resin film comprises a thermosetting resin.

7. The process as claimed in at least one of claims 1 to 6, wherein the resin film comprises an epoxy resin, a phenolic resin or a melamine resin.

8. The process as claimed in at least one of claims 1 to 7, wherein the number of textile layers and resin films in the pile is determined in such a way that the ratio of the sum of the basis weights of the textile layers to the sum of the basis weights of the resin films is within the range from 1:0.25 to 1:2.

9. The process as claimed in at least one of claims 1 to 8, wherein the sequence of textile and resin layers in the pile is such that the resin will completely penetrate the textile material during the flow period.

10. The form-stable three-dimensionally deformed, resinated sheetlike textile material produced by the process of claim 1.

11. The use of the form-stable, three-dimensionally deformed, resinated, sheetlike textile material produced by the process of claim 1 for producing sheetlike sandwhich structures.

## Revendications

1. Procédé pour produire une matière textile de forme plate, traitée par de la résine, façonnée ou moulée en trois dimensions, de formes stables, comportant une structure réticulaire du genre filigrane, procédé caractérisé en ce qu'on place en empilement l'une sur l'autre une ou plusieurs couches d'une matière textile capable(s) de subir un emboutissage profond et une ou plusieurs feuilles de résine, la quantité de résine étant dosée et mesurée de façon que la matière textile, à l'état étiré provenant d'un emboutissage profond, forme un réseau du genre filigrane, et en ce que l'on porte ensuite la pile à une température à laquelle la résine est fluide par étirage ou emboutissage profond donnant la forme voulue, on règle la température de manière que la résine puisse durcir et l'on conserve la pile moulée, sous cette forme, jusqu'à ce que la résine ait durci totalement ou suffisamment.

2. Procédé selon la revendication 1, caractérisé en ce que la matière textile capable de subir un étirage ou emboutissage profond présente une grande extensibilité élastique.

3. Procédé selon l'une au moins des revendications 1 et 2, caractérisé en ce que la matière textile capable de subir un étirage ou emboutissage profond est un tricot.

4. Procédé selon l'une au moins des revendications 1 à 3, caractérisé en ce que la matière textile capable de subir un emboutissage ou étirage profond est produite à partir d'un fil sans fin en fibres de synthèse ou un fil à fibres discontinues ou à partir de filaments de verre.

5. Procédé selon l'une au moins des revendications 1 à 4, caractérisé en ce que la matière textile capable de subir un emboutissage ou un étirage profond est produite à partir d'un fil de polyester.

6. Procédé selon l'une au moins des revendications 1 à 5, caractérisé en ce que la feuille de résine consiste en une feuille de résine thermodurcissable.

7. Procédé selon l'une au moins des revendications 1 à 6, caractérisé en ce que la feuille de résine consiste en une résine époxyde, une résine phénolique ou une résine de mélamine.

8. Procédé selon l'une au moins des revendications 1 à 7, caractérisé en ce que le nombre des couches de textile et des feuilles de résine dans une pile est dosé et mesuré de façon que le rapport entre la somme des poids surfaciques des couches de textile et la somme des poids surfaciques des feuilles de résine se situe entre 1:0,25 et 1:2.

9. Procédé selon l'une au moins des revendications 1 à 8, caractérisé en ce que l'ordre de succession des couches de textile et de résine dans la pile est choisi de façon que, pendant la période de son écoulement, la résine traverse et pénètre entièrement la matière textile.

10. Matière textile de forme plate, traitée par de la résine, moulée en trois dimensions, de formes stables, produite selon la procédé de la revendication 1.

11. Utilisation de la matière textile de forme plate, traitée par de la résine, moulée en trois dimensions, de formes stables, produite selon le procédé de la revendication 1 pour fabriquer un corps de forme plate à structure en "sandwich" ou stratifiée.
